# EUROPEAN PATENT APPLICATION

(11) **EP 4 679 387 A1**
(43) Date of publication of application: **14.01.2026**
(21) Application number: 24195179.7
(22) Date of filing: 19.08.2024
(51) Int. Cl.: G06V 40/10, G06V 40/20, G06V 10/75

(54) **USER IDENTIFICATION DEVICE, METHOD AND NON-TRANSITORY COMPUTER READABLE STORAGE MEDIUM THEREOF**

(30) Priority: 10.07.2024 US 202418769384
(71) Applicant: HTC Corporation, Taoyuan City 330, (TW)
(72) Inventor: LIU, Yen-Ting, 330 Taoyuan City (TW); SHIAU, Jia-Yau, 330 Taoyuan City (TW)
(74) Representative: Schmidbauer, Andreas Konrad

(57) **Abstract**

A user identification device, method, and non-transitory computer readable storage medium thereof are provided. The device receives a device pose information from a target device, the target device is used by a target user, and the device pose information includes a three-degree-of-freedom pose information of the target device. The device analyzes a real-time image including a plurality of users to be identified to calculate a human body pose information corresponding to each of the plurality of users to be identified. The device compares the plurality of human body pose information and the device pose information to identify the target user from the plurality of users to be identified.

## Description

### BACKGROUND

### Field of Invention

The present invention relates to a user identification device, method, and non-transitory computer readable storage medium thereof. More particularly, the present invention relates to a user identification device, method, and non-transitory computer readable storage medium thereof that can correctly identify a target user.

### Description of Related Art

Generally speaking, it is difficult to identify a specific user among the crowd. In the existing technology, the user identification operation can be performed through image recognition technology. However, such technology requires the user's characteristic information (e.g., facial characteristic information) to be pre-established, and the device itself needs to be equipped with a high-resolution camera to accurately compare the user's characteristic information for identity recognition.

In addition, in the existing technology, the user's location can be located through the Global Positioning System (GPS) for user identification. However, since GPS has an error of several meters, it is still difficult to identify a specific user in a crowded environment.

For example, when calling a taxi among the crowd during peak hours, it is usually difficult for the taxi driver to directly identify the user who requested the call due to the crowd, so the taxi driver often picks up the wrong user.

Accordingly, there is an urgent need for a user identification technology that can correctly identify a target user.

### SUMMARY

An objective of the present disclosure is to provide a user identification device. The user identification device comprises a transceiver interface and a processor, and the processor is electrically connected to the transceiver interface. The processor receives a device pose information from a target device, the target device is used by a target user, and the device pose information comprises a three-degree-of-freedom pose information of the target device. The processor analyzes a real-time image including a plurality of users to be identified to calculate a human body pose information corresponding to each of the plurality of users to be identified. The processor compares the plurality of human body pose information and the device pose information to identify the target user from the plurality of users to be identified.

Another objective of the present disclosure is to provide a user identification method, which is adapted for use in an electronic apparatus. The user identification method comprises the following steps: receiving a device pose information from a target device, wherein the target device is used by a target user, and the device pose information comprises a three-degree-of-freedom pose information of the target device; analyzing a real-time image including a plurality of users to be identified to calculate a human body pose information corresponding to each of the plurality of users to be identified; and comparing the plurality of human body pose information and the device pose information to identify the target user from the plurality of users to be identified.

A further objective of the present disclosure is to provide a non-transitory computer readable storage medium having a computer program stored therein. The computer program comprises a plurality of codes, the computer program executes a user identification method after being loaded into an electronic apparatus. The user identification method comprises following steps: receiving a device pose information from a target device, wherein the target device is used by a target user, and the device pose information comprises a three-degree-of-freedom pose information of the target device; analyzing a real-time image including a plurality of users to be identified to calculate a human body pose information corresponding to each of the plurality of users to be identified; and comparing the plurality of human body pose information and the device pose information to identify the target user from the plurality of users to be identified.

According to the above descriptions, the user identification technology (at least including the device, the method, and the non-transitory computer readable storage medium) provided by the present disclosure actively receives device pose information from the target device, and calculates the human body pose information corresponding to each of the plurality of users to be identified by analyzing the real-time image. Finally, the user identification technology provided by the present disclosure compares the plurality of human body pose information and the device pose information to identify the target user from the plurality of users to be identified. The user identification technology provided by the present disclosure does not require pre-established characteristic information of the user to be identified, and does not require the device itself to be equipped with a high-resolution camera, and still being able to correctly identify the target user. In addition, the user identification technology provided by the present disclosure can be implemented through a variety of different types of target devices, and is not limited to specific devices or additional installation of new components. Accordingly, the user identification technology provided by the present disclosure reduces the threshold and cost of the device, and also reduces the computational cost of executing a large number of feature comparison algorithms.

The detailed technology and preferred embodiments implemented for the subject disclosure are described in the following paragraphs accompanying the appended drawings for people skilled in this field to well appreciate the features of the claimed invention.

### BRIEF DESCRIPTION OF THE DRAWINGS

FIG. 1 is a schematic diagram depicting the applicable scene of the user identification device of the first embodiment;
FIG. 2 is an architectural schematic diagram depicting the target device of some embodiments;
FIG. 3 is architectural schematic diagram depicting the real-time image of some embodiments;
FIG. 4 is architectural schematic diagram depicting the real-time image of some embodiments; and
FIG. 5 is a partial flowchart depicting the user identification method of the second embodiment.

### DETAILED DESCRIPTION

In the following description, a user identification device, method, and non-transitory computer readable storage medium thereof according to the present disclosure will be explained with reference to embodiments thereof. However, these embodiments are not intended to limit the present disclosure to any environment, applications, or implementations described in these embodiments. Therefore, description of these embodiments is only for purpose of illustration rather than to limit the present disclosure. It shall be appreciated that, in the following embodiments and the attached drawings, elements unrelated to the present disclosure are omitted from depiction. In addition, dimensions of individual elements and dimensional relationships among individual elements in the attached drawings are provided only for illustration but not to limit the scope of the present disclosure.

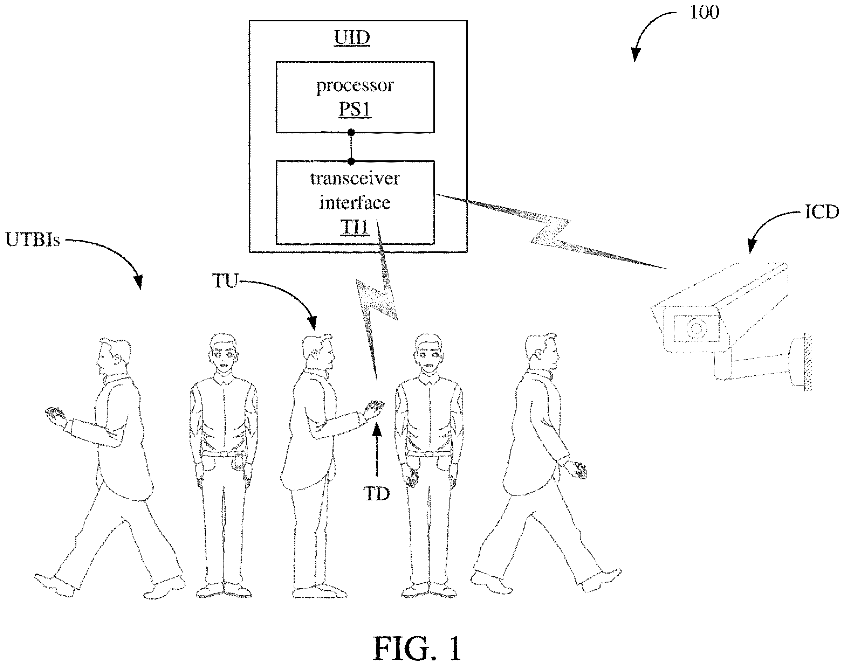

The applicable scenario of the present embodiment will be described first, and its schematic diagram 100 is depicted in FIG. 1. As shown in FIG. 1, in the application environment of the present disclosure, the environment has a plurality of users to be identified UTBIs (i.e., users who have not yet been identified), and the environment is provided with one or more image capturing devices ICD for capturing a real-time image including the plurality of users to be identified UTBIs. The user identification device UID of the present disclosure may identify which user is the target user TU from the plurality of users to be identified UTBIs based on the real-time image generated by the image capturing device ICD and the device pose information generated by the target device TD used by the user (e.g., a wearable device, a smart bracelet, a smart watch, a mobile device, etc.).

It shall be appreciated that FIG. 1 is merely an example for illustration, and the present disclosure does not limit the number of image capturing devices ICD and target devices TD connected to the user identification device UID. The user identification device UID can simultaneously communicate with multiple image capturing devices ICD and multiple target devices TD through the network connection, depending on the scale of the device and the actual needs of the user.

In the first embodiment of the present disclosure, as shown in FIG. 1, the user identification device UID comprises a processor PS1 and a transceiver interface TI1. The user identification device UID is communicatively connected to the target device TD and the image capturing device ICD.

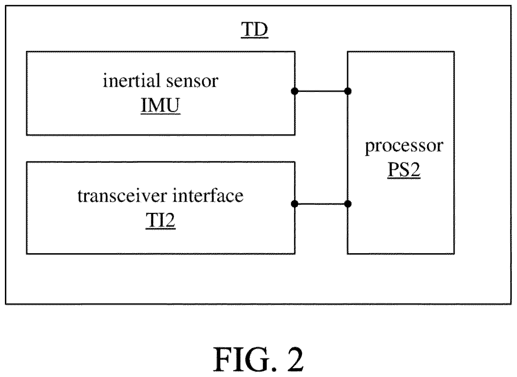

In some embodiments, the target device TD may be a wearable device, a smart bracelet, a smart watch, a mobile device, etc. used by the user. As shown in FIG. 2, the target device TD comprises an inertial sensor IMU, a processor PS2 and a transceiver interface TI2.

It shall be appreciated that the transceiver interface TI1 and the transceiver interface TI2 is an interface capable of receiving and transmitting data or other interfaces capable of receiving and transmitting data and known to those of ordinary skill in the art. The transceiver interface can receive data from sources such as external apparatuses, external web pages, external applications, and so on. The processor PS1 and the processor PS2 may be any of various processors, Central Processing Units (CPUs), microprocessors, digital signal processors or other computing apparatuses known to those of ordinary skill in the art.

In the present embodiment, the inertial sensor IMU is configured to generate a plurality of inertial measurement parameters corresponding to the target device TD. It shall be appreciated that in the present disclosure, the inertial sensor IMU may only include a gyroscope and an accelerometer, without configurations such as a magnetometer or a barometer.

It shall be appreciated that the image capturing device ICD may be any device with image capturing function. For example, the image capturing device ICD may comprise a plurality of image capturing units (e.g., a plurality of depth camera lenses) to generate a real-time image corresponding to a field of view (FOV).

First, in the present embodiment, when the processor PS1 starts to perform the user identification operation, it will first receive device information from the target device TD for further use in subsequent comparison operations. Specifically, the processor PS1 receives a device pose information from the target device TD, the target device TD is used by the target user TU, and the device pose information comprises a the three-degree-of-freedom pose information of the target device TD (i.e., only rotation information, but no depth information such as translation).

It shall be appreciated that the device pose information may be generated by the target device TD based on the inertial sensor IMU. Specifically, the inertial sensor IMU continuously generates a sequence of a plurality of inertial measurement parameters (for example, an inertial measurement parameter stream generated at a frequency of 10 times per second).

Next, the processor PS1 receives real-time images containing the plurality of users to be identified UTBIs from the image capturing device ICD, so as to obtain the human body pose of each of the plurality of users to be identified UTBIs. Specifically, the processor PS1 analyzes a real-time image including a plurality of users to be identified UTBIs to calculate a human body pose information corresponding to each of the plurality of users to be identified UTBIs.

In some embodiments, the image capturing device ICD can be disposed at a fixed position to capture real-time images at a fixed position. For example, the image capturing device ICD can be installed at a fixed position in the store, and the user identification device UID performs the user identification operation (e.g., the target user in the store who makes a positioning request).

In some embodiments, the image capturing device ICD can also be installed on a movable device to dynamically capture real-time images at different positions. For example, the image capturing device ICD can be installed on a taxi vehicle to capture real-time images on the roadside, and the user identification device UID performs the user identification operation (e.g., the target user who makes a ride request).

In some embodiments, the processor PS1 may perform the calculation and analysis of the human body pose of the plurality of users to be identified UTBIs through the analysis technology of the human skeleton shape and torque in biomechanics. For example, the processor PS1 may determine the joint angles and positions of each of the plurality of users to be identified UTBIs through a pose detection algorithm. When the user's joint angle reaches a predetermined angle and position, it is determined that the user is performing a corresponding movement.

In some embodiments, a single image capturing device ICD may not be able to capture all of the plurality of users to be identified UTBIs due to occlusion problems. Therefore, the processor PS1 can calculate the human body poses corresponding to the plurality of users to be identified UTBIs by combining the real-time images generated by a plurality of image capturing devices ICD.

In some embodiments, in order to make the identification operation more accurate, the processor PS1 may select a suitable image capturing device ICD to capture real-time images based on the location information of the target device TD (e.g., GPS information). Specifically, based on a location information of the target device TD, the processor PS1 determines an image capturing device (e.g., a first image capturing device in some embodiments) from a plurality of image capturing devices ICD. Then, the processor PS1 obtains the real-time image including the plurality of users to be identified UTBIs based on the first image capturing device.

In some embodiments, in order to save resource consumption, the processor PS1 receives the device pose information and starts the shooting operation of the image capturing device ICD only after receiving the request actively sent by the target device TD. (e.g., the target user in the store who makes a positioning request, the target user who makes a ride request). Specifically, in response to receiving a user identification request, the processor PS1 receives the device pose information corresponding to the target device TD from the target device TD. Next, in response to receiving the user identification request, the processor PS1 receives the real-time image including the plurality of users to be identified UTBIs from an image capturing device ICD.

In some embodiments, the user identification request is generated by the target user TU operating the target device TD.

Finally, the processor PS1 compares the plurality of human body pose information and the device pose information to identify the target user TU from the plurality of users to be identified UTBIs.

It shall be appreciated that a specific human pose or movement can be compared to the corresponding fixed device pose (e.g., the angle of the device, the degree of slight shaking of the device, etc.).

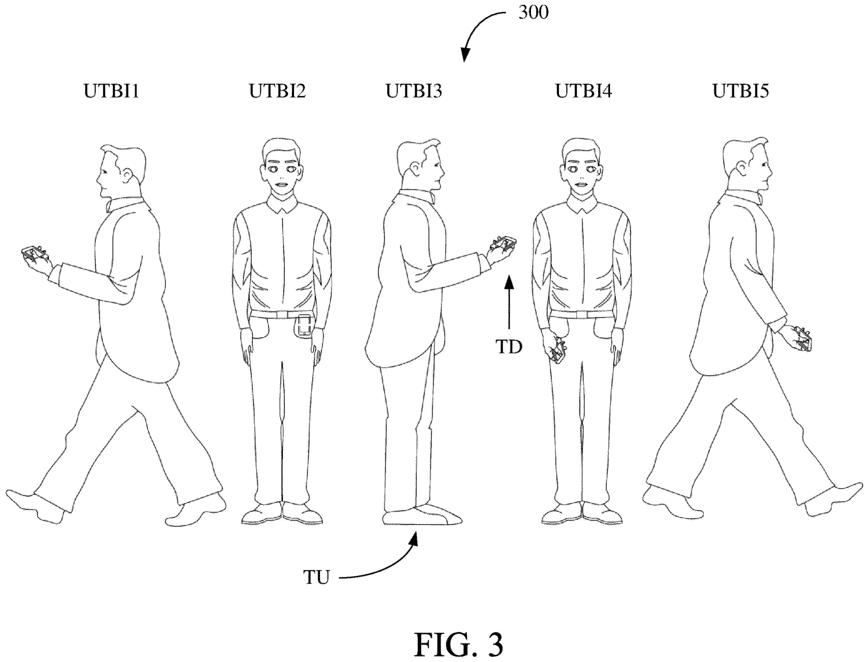

For ease of understanding, please refer to the human body pose diagram 300 in FIG. 3, which illustrates five user poses in which the target device TD is a mobile device. In the present example, the user to be identified UTBI1 corresponds to the human pose of operating a mobile device and walking to the left, the user to be identified UTBI2 corresponds to the human pose of the user putting the phone in his/her pocket and standing in place, the user to be identified UTBI3 corresponds to the human pose of operating a mobile device and standing in place, the user to be identified UTBI4 corresponds to the human pose of the user holding the mobile device in his/her hand and standing in place, and the user to be identified UTBI5 corresponds to the human body pose of the user holding the mobile device in his/her hand and walking to the right.

It shall be appreciated that the movement of the user holding the mobile device for use (e.g., the user to be identified UTBI1 and the user to be identified UTBI3) and the movement of the user putting the mobile device in the pocket (e.g., the user to be identified UTBI2) should correspond to different device pose information. In addition, the corresponding device pose information will not be the same when the user holds the mobile device and uses it in place (e.g. the user to be identified UTBI3) and when the user holds the mobile device and uses it while walking (e.g., the user to be identified UTBI1).

In the present example, the device pose information received by the processor PS1 corresponds to an angle that is being used by the user and is in a relatively static state (i.e., the device shakes slightly). The processor PS1 can identify the user to be identified UTBI3 as the target user TU from the users to be identified UTBI1 to UTBI5 by comparing the plurality of human body pose information and the device pose information.

It shall be appreciated that the present disclosure can use a large amount of training data to train a neural network (NN) to perform comparison and identification of human body poses and device poses. The processor PS1 can determine whether the set of the device pose and the human body pose come from the same target through the trained neural network.

In some embodiments, there may be multiple human body pose information of the plurality of users to be identified that match the device pose information at the same time. Therefore, in order to improve the accuracy of identifying the target user, the processor PS1 may continuously compare the human body pose information in a time interval and the device pose information in the time interval (e.g., corresponding time series data), and perform multiple comparison operations to gradually narrow down the possible candidate target users until the only target user is determined.

Specifically, the processor PS1 compares the plurality of human body pose information and the device pose information at a first time point to generate a candidate target user list. Next, the processor PS1 identifies the target user TU from the plurality of users to be identified UTBIs based on the candidate target user list.

In some embodiments, the candidate target user list comprises at least one candidate target user, and the plurality of human body pose information of the at least one candidate target user at the first time point match the device pose information.

In some embodiments, the processor PS1 determines whether a first human body pose information matches the device pose information at a second time point. Next, in response to determining that the first human body pose information does not match the device pose information at the second time point, the processor PS1 removes a first candidate target user corresponding to the first human body pose information from the candidate target user list to update the candidate target user list, and the second time point is later than the first time point.

In some embodiments, in order to make the analysis results of human pose information more accurate, the processor PS1 may analyze the user's movements through continuous time intervals (e.g., sliding window). Specifically, based on the plurality of human body pose information corresponding to a time interval, the processor PS1 determines a movement of each of the plurality of users to be identified UTBIs corresponding to the time interval. Next, the processor PS1 determines a target movement among the movements that matches the device pose information to identify the target user TU from the plurality of users to be identified UTBIs.

In some embodiments, in order to reduce the operation cost of image analysis, the processor PS1 may only analyze a specific range of the real-time image corresponding to the plurality of users to be identified UTBIs to calculate the human body pose information of the specific range of each of the plurality of users to be identified UTBIs.

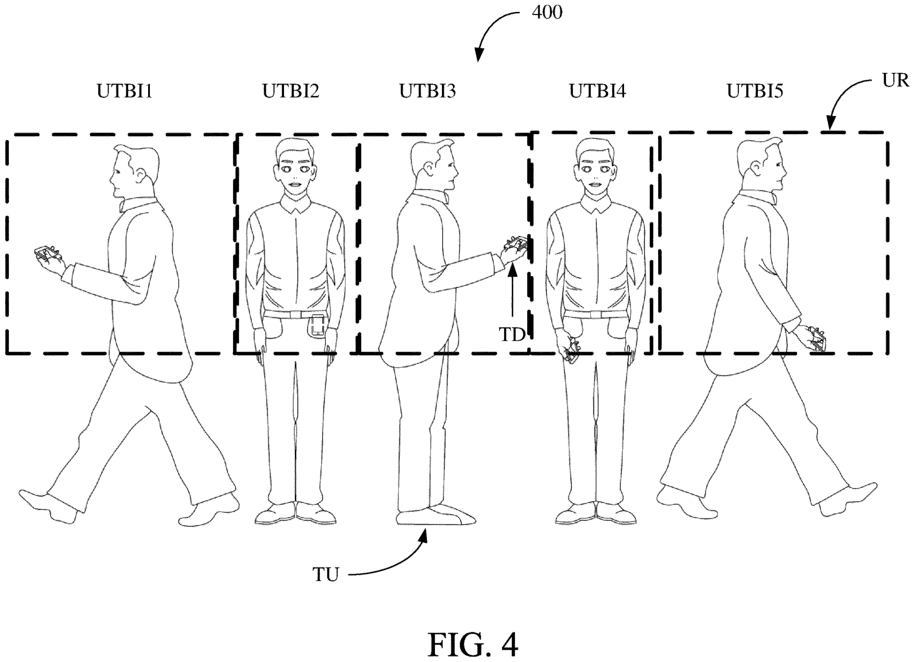

For example, please refer to the human body pose diagram 400 in FIG. 4, which illustrates five user poses in which the target device TD is a mobile device. In the present example, the processor PS1 may only analyze the upper body range UR of each of the plurality of users to be identified UTBIs in the real-time image to calculate the human body pose information corresponding to the upper body range UR of each of the plurality of users to be identified UTBIs.

In some embodiments, the target device TD may be a wearable device, and the wearable device is worn on a body part (e.g., wrist) of the target user TU. In order to reduce the operation cost of image analysis, the processor PS1 may only analyze the body part corresponding to each of the plurality of users to be identified UTBIs in the real-time image to calculate the human body pose information corresponding to the body part of each of the plurality of users to be identified UTBIs.

In some embodiments, the target device TD may be a mobile device held in a hand position by the target user TU. In order to reduce the operation cost of image analysis, the processor PS1 may only analyze the hand position corresponding to each of the plurality of users to be identified UTBIs in the real-time image to calculate the human body pose information corresponding to the hand position of each of the plurality of users to be identified UTBIs.

For example, the processor PS1 may determine the angle of the finger skeleton and the position of the finger joints of each of the plurality of users to be identified UTBIs through a pose detection algorithm. When the user's finger skeleton reaches a predetermined angle and position, it is determined that the user is performing a corresponding movement.

In some embodiments, the user identification device UID may further notify the user of the identification result through the user interface (e.g., a sound output, an image output marking the target user TU, etc.). Specifically, the processor PS1 generates an identification information based on a comparison result generated by comparing the plurality of human body pose information and the device pose information. Next, the processor PS1 transmits the identification information to a user interface to perform an output operation corresponding to the identification information.

In some embodiments, the processor PS1 may further generate an instant notification message based on the candidate target user list, and transmit the instant notification message to the user interface, and the instant notification message is configured to indicate the current candidate target users at the current time point.

According to the above descriptions, the user identification device UID provided by the present disclosure actively receives device pose information from the target device, and calculates the human body pose information corresponding to each of the plurality of users to be identified by analyzing the real-time image. Finally, the user identification device UID provided by the present disclosure compares the plurality of human body pose information and the device pose information to identify the target user from the plurality of users to be identified. The user identification device UID provided by the present disclosure does not require pre-established characteristic information of the user to be identified, and does not require the device itself to be equipped with a high-resolution camera, and still being able to correctly identify the target user. In addition, the user identification device UID provided by the present disclosure can be implemented through a variety of different types of target devices, and is not limited to specific devices or additional installation of new components. Accordingly, the user identification device UID provided by the present disclosure reduces the threshold and cost of the device, and also reduces the computational cost of executing a large number of feature comparison algorithms.

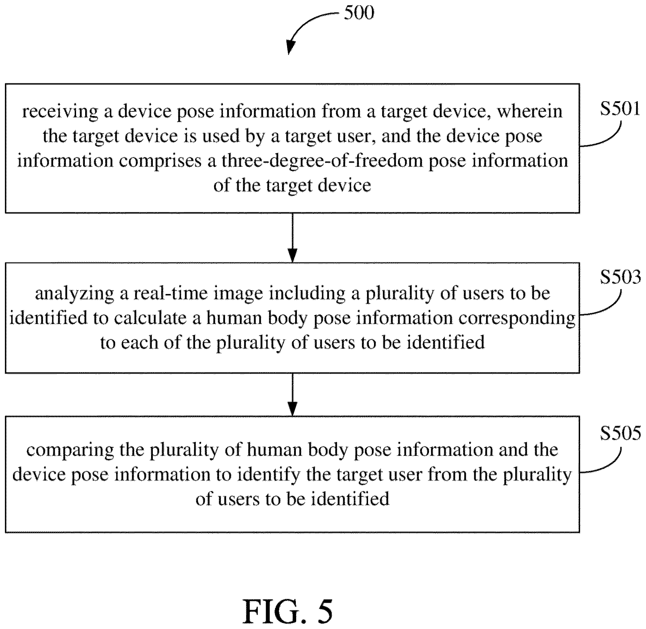

A second embodiment of the present disclosure is a user identification method and a flowchart thereof is depicted in FIG. 5. The user identification method 500 is adapted for an electronic apparatus (e.g., the user identification device UID described in the first embodiment). The user identification method 500 identifies the target user through steps S501 to S505.

In the step S501, the electronic apparatus receives a device pose information from a target device, wherein the target device is used by a target user, and the device pose information comprises a three-degree-of-freedom pose information of the target device. Next, in the step S503, the electronic apparatus analyzes a real-time image including a plurality of users to be identified to calculate a human body pose information corresponding to each of the plurality of users to be identified.

Finally, in the step S505, the electronic apparatus compares the plurality of human body pose information and the device pose information to identify the target user from the plurality of users to be identified.

In some embodiments, the user identification method 500 further comprises the following steps: in response to receiving a user identification request, receiving the device pose information corresponding to the target device from the target device; and in response to receiving the user identification request, receiving the real-time image including the plurality of users to be identified from an image capturing device.

In some embodiments, the user identification method 500 further comprises the following steps: determining a first image capturing device from a plurality of image capturing devices based on a location information of the target device; and obtaining the real-time image including the plurality of users to be identified based on the first image capturing device.

In some embodiments, wherein the step of identifying the target user from the plurality of users to be identified further comprises the following steps: comparing the plurality of human body pose information and the device pose information at a first time point to generate a candidate target user list; and identifying the target user from the plurality of users to be identified based on the candidate target user list.

In some embodiments, wherein the candidate target user list comprises at least one candidate target user, and the plurality of human body pose information of the at least one candidate target user at the first time point match the device pose information.

In some embodiments, the user identification method 500 further comprises the following steps: determining whether a first human body pose information matches the device pose information at a second time point; and in response to determining that the first human body pose information does not match the device pose information at the second time point, removing a first candidate target user corresponding to the first human body pose information from the candidate target user list to update the candidate target user list.

In some embodiments, wherein the step of comparing the plurality of human body pose information and the device pose information comprises the following steps: determining, based on the plurality of human body pose information corresponding to a time interval, a movement of each of the plurality of users to be identified corresponding to the time interval; and determining a target movement among the movements that matches the device pose information to identify the target user from the plurality of users to be identified.

In some embodiments, wherein the target device is a wearable device, the wearable device is worn on a body part of the target user, and the user identification method 500 further comprises the following steps: analyzing the body part corresponding to each of the plurality of users to be identified in the real-time image to calculate the human body pose information corresponding to the body part of each of the plurality of users to be identified.

In some embodiments, wherein the target device is a mobile device, the mobile device is held in a hand position by the target user, and the user identification method 500 further comprises the following steps: analyzing the hand position corresponding to each of the plurality of users to be identified in the real-time image to calculate the human body pose information corresponding to the hand position of each of the plurality of users to be identified.

In addition to the aforesaid steps, the second embodiment can also execute all the operations and steps of the user identification device UID set forth in the first embodiment, have the same functions, and deliver the same technical effects as the first embodiment. How the second embodiment executes these operations and steps, has the same functions, and delivers the same technical effects will be readily appreciated by those of ordinary skill in the art based on the explanation of the first embodiment. Therefore, the details will not be repeated herein.

The user identification method described in the second embodiment may be implemented by a computer program having a plurality of codes. The computer program may be a file that can be transmitted over the network, or may be stored into a non-transitory computer readable storage medium. After the codes of the computer program are loaded into an electronic apparatus (e.g., the user identification device UID), the computer program executes the user identification method as described in the second embodiment. The non-transitory computer readable storage medium may be an electronic product, e.g., a read only memory (ROM), a flash memory, a floppy disk, a hard disk, a compact disk (CD), a mobile disk, a database accessible to networks, or any other storage medium with the same function and well known to those of ordinary skill in the art.

It shall be appreciated that in the specification and the claims of the present disclosure, some words (e.g., the human body pose information, candidate target user, image capturing device, time point, etc.) are preceded by terms such as "first" or "second", and these terms of "first" or "second" are only used to distinguish these different words. For example, the "first" and "second" time points are only used to indicate the time point used in different operations.

According to the above descriptions, the user identification technology (at least including the device, the method, and the non-transitory computer readable storage medium) provided by the present disclosure actively receives device pose information from the target device, and calculates the human body pose information corresponding to each of the plurality of users to be identified by analyzing the real-time image. Finally, the user identification technology provided by the present disclosure compares the plurality of human body pose information and the device pose information to identify the target user from the plurality of users to be identified. The user identification technology provided by the present disclosure does not require pre-established characteristic information of the user to be identified, and does not require the device itself to be equipped with a high-resolution camera, and still being able to correctly identify the target user. In addition, the user identification technology provided by the present disclosure can be implemented through a variety of different types of target devices, and is not limited to specific devices or additional installation of new components. Accordingly, the user identification technology provided by the present disclosure reduces the threshold and cost of the device, and also reduces the computational cost of executing a large number of feature comparison algorithms.

The above disclosure is related to the detailed technical contents and inventive features thereof. People skilled in this field may proceed with a variety of modifications and replacements based on the disclosures and suggestions of the disclosure as described without departing from the characteristics thereof. Nevertheless, although such modifications and replacements are not fully disclosed in the above descriptions, they have substantially been covered in the following claims as appended.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A user identification device, comprising:
a transceiver interface; and
a processor, being electrically connected to the transceiver interface, and configured to perform the following operations:
receiving a device pose information from a target device, wherein the target device is used by a target user, and the device pose information comprises a three-degree-of-freedom pose information of the target device;
analyzing a real-time image including a plurality of users to be identified to calculate a human body pose information corresponding to each of the plurality of users to be identified; and
comparing the plurality of human body pose information and the device pose information to identify the target user from the plurality of users to be identified.

2. The user identification device of claim 1, wherein the processor is further configured to perform the following operations:
in response to receiving a user identification request, receiving the device pose information corresponding to the target device from the target device; and
in response to receiving the user identification request, receiving the real-time image including the plurality of users to be identified from an image capturing device.

3. The user identification device of claim 1, wherein the processor is further configured to perform the following operations:
determining a first image capturing device from a plurality of image capturing devices based on a location information of the target device; and
obtaining the real-time image including the plurality of users to be identified based on the first image capturing device.

4. The user identification device of claim 1, wherein the operation of identifying the target user from the plurality of users to be identified further comprises the following operations:
comparing the plurality of human body pose information and the device pose information at a first time point to generate a candidate target user list; and
identifying the target user from the plurality of users to be identified based on the candidate target user list.

5. The user identification device of claim 4, wherein the candidate target user list comprises at least one candidate target user, and the plurality of human body pose information of the at least one candidate target user at the first time point match the device pose information.

6. The user identification device of claim 5, wherein the processor is further configured to perform the following operations:
determining whether a first human body pose information matches the device pose information at a second time point; and
in response to determining that the first human body pose information does not match the device pose information at the second time point, removing a first candidate target user corresponding to the first human body pose information from the candidate target user list to update the candidate target user list.

7. The user identification device of claim 1, wherein the operation of comparing the plurality of human body pose information and the device pose information comprises the following operations:
determining, based on the plurality of human body pose information corresponding to a time interval, a movement of each of the plurality of users to be identified corresponding to the time interval; and
determining a target movement among the movements that matches the device pose information to identify the target user from the plurality of users to be identified.

8. The user identification device of claim 1, wherein the target device is a wearable device, the wearable device is worn on a body part of the target user, and the processor is further configured to perform the following operations:
analyzing the body part corresponding to each of the plurality of users to be identified in the real-time image to calculate the human body pose information corresponding to the body part of each of the plurality of users to be identified.

9. The user identification device of claim 1, wherein the target device is a mobile device, the mobile device is held in a hand position by the target user, and the processor further performs the following operations:
analyzing the hand position corresponding to each of the plurality of users to be identified in the real-time image to calculate the human body pose information corresponding to the hand position of each of the plurality of users to be identified.

10. The user identification device of claim 1, wherein the processor is further configured to perform the following operations:
generating an identification information based on a comparison result generated by comparing the plurality of human body pose information and the device pose information; and
transmitting the identification information to a user interface to perform an output operation corresponding to the identification information.

11. A user identification method, being adapted for use in an electronic apparatus, wherein the user identification method comprises the following steps:
receiving a device pose information from a target device, wherein the target device is used by a target user, and the device pose information comprises a three-degree-of-freedom pose information of the target device;
analyzing a real-time image including a plurality of users to be identified to calculate a human body pose information corresponding to each of the plurality of users to be identified; and
comparing the plurality of human body pose information and the device pose information to identify the target user from the plurality of users to be identified.

12. The user identification method of claim 11, wherein the user identification method further comprises the following steps:
in response to receiving a user identification request, receiving the device pose information corresponding to the target device from the target device; and
in response to receiving the user identification request, receiving the real-time image including the plurality of users to be identified from an image capturing device.

13. The user identification method of claim 11, wherein the user identification method further comprises the following steps:
determining a first image capturing device from a plurality of image capturing devices based on a location information of the target device; and
obtaining the real-time image including the plurality of users to be identified based on the first image capturing device.

14. The user identification method of claim 11, wherein the step of identifying the target user from the plurality of users to be identified further comprises the following steps:
comparing the plurality of human body pose information and the device pose information at a first time point to generate a candidate target user list; and
identifying the target user from the plurality of users to be identified based on the candidate target user list.

15. The user identification method of claim 14, wherein the candidate target user list comprises at least one candidate target user, and the plurality of human body pose information of the at least one candidate target user at the first time point match the device pose information.
